# EUROPEAN PATENT APPLICATION

(11) **EP 4 624 533 A1**
(43) Date of publication of application: **01.10.2025**
(21) Application number: 23894197.5
(22) Date of filing: 18.08.2023
(51) Int. Cl.: C08L 101/00, C08J 3/12, C08J 5/04, C08L 63/00, C08L 77/00

(54) **THERMOSETTING RESIN COMPOSITION AND CURED PRODUCT**

(30) Priority: 22.11.2022 JP 2022186375
(71) Applicant: Polyplastics-Evonik Corporation, Tokyo, 163-0913 (JP)
(72) Inventor: NAKAIE, Yoshiki, Tokyo 163-0913 (JP); FUJIKI, Daisuke, Tokyo 163-0913 (JP)
(74) Representative: Grünecker Patent- und Rechtsanwälte PartG mbB
(86) International application number: PCT/JP2023/029838
(87) International publication number: WO 2024/111181

(57) **Abstract**

The present disclosure provides a thermosetting resin composition that forms a cured product having even higher toughness, and the like. The present disclosure mainly provides a thermosetting resin composition containing: a first resin which is a thermosetting resin; and resin particles containing a second resin having an amide bond. The second resin contains one or more second functional groups selected from the group consisting of an amino group, a carboxy group, an isocyanate group, and a carboxylic anhydride group. The first resin contains a first functional group capable of reacting with the second functional group. The second resin contains the one or more second functional group in an amount of from 25 to 190 mmol/kg. The second resin has a relative viscosity of from 1.50 to 2.50.

## Description

### Technical Field

The present disclosure relates to a thermosetting resin composition and a cured product.

### Background Art

A cured product formed by curing an epoxy resin composition is used as a material for aircraft bodies, golf club shafts, fishing rods, and the like (for example, Patent Document 1).

From the viewpoint of increasing toughness of a cured product formed by curing an epoxy resin composition, an epoxy resin composition containing an epoxy resin and resin particles containing a polyamide resin has been used (for example, Patent Document 2).

### Citation List

### Patent Document

Patent Document 1: JP S61-103922 A
Patent Document 2: WO 2015/019965

### Summary of Invention

### Technical Problem

Meanwhile, a cured product having even higher toughness may be required.

However, a thermosetting resin composition that forms a cured product having even higher toughness has not been sufficiently studied so far.

Thus, an object of the present disclosure is to provide: a thermosetting resin composition that forms a cured product having even higher toughness; and a cured product formed by thermally curing the thermosetting resin composition.

### Solution to Problem

A first aspect of the present disclosure relates to a thermosetting resin composition containing:
a first resin which is a thermosetting resin; and
resin particles containing a second resin having an amide bond,
wherein
the second resin contains one or more second functional groups selected from the group consisting of an amino group, a carboxy group, an isocyanate group, and a carboxylic anhydride group,
the first resin contains a first functional group capable of reacting with the one or more second functional group,
the second resin contains the one or more second functional group in an amount of from 25 to 190 mmol/kg, and
the second resin has a relative viscosity of from 1.50 to 2.50.

A second aspect of the present disclosure relates to a cured product formed by thermally curing the thermosetting resin composition.

A third aspect of the present disclosure relates to a prepreg in which an aggregate of reinforcing fibers is impregnated or infused with the thermosetting resin composition.

A fourth aspect of the present disclosure relates to a molded article formed from the cured product.

A fifth aspect of the present disclosure relates to a fiber-reinforced plastic including:
the cured product; and
a reinforcing fiber.

### Advantageous Effects of Invention

The present disclosure can provide a thermosetting resin composition that forms a cured product having even higher toughness. Also, the present disclosure can provide a cured product formed by thermally curing the thermosetting resin composition.

### Brief Description of Drawings

FIG. 1 is an SEM image of resin particles used in Example 3.
FIG. 2 is an SEM image of a cross-section of a cured product formed by thermally curing a thermosetting resin composition of Example 3.

### Description of Embodiments

Hereinafter, embodiments of the present disclosure will be described.

Note that the respective configurations, the combinations thereof, and the like in the respective embodiments are only examples, and the configurations may be added, omitted, substituted, or otherwise modified as appropriate within a scope that does not depart from the spirit of the present disclosure. The present disclosure is not limited by the embodiments and is limited only by the claims.

Each aspect disclosed in the present specification can be combined with any other feature disclosed herein.

### Thermosetting Resin Composition

First, a thermosetting resin composition according to the present embodiment will be described.

The thermosetting resin composition according to the present embodiment contains:
a first resin which is a thermosetting resin; and
resin particles containing a second resin having an amide bond.

The second resin contains one or more second functional groups selected from the group consisting of an amino group, a carboxy group, an isocyanate group, and a carboxylic anhydride group.

The first resin contains a first functional group capable of reacting with the second functional group.

The second resin contains the second functional group in an amount of from 25 to 190 mmol/kg.

The second resin has a relative viscosity of from 1.50 to 2.50.

The second resin containing the second functional group in an amount of 25 mmol/kg or more further increases toughness of a cured product.

A possible reason is as follows:
The second resin containing the second functional group in an amount of 25 mmol/kg or more increases affinity between the resin particles and the first polymer in the cured product, which increases the toughness of the cured product at a boundary between the resin particles and the first polymer.

Generally, the relative viscosity of a resin is used as an index of the average molecular weight of the resin. The higher the relative viscosity of the resin, the greater the average molecular weight of the resin.

The second resin having a relative viscosity of 2.50 or less decreases the average molecular weight of the second resin, which makes it easier to increase a content ratio of the second functional group in the second resin.

The second resin having a relative viscosity of 1.50 or more further increases the toughness of the cured product.

A possible reason is as follows:
The second resin having a relative viscosity of 1.50 or more increases the average molecular weight of the second resin, which increases the toughness of the resin particles.

The second resin containing the second functional group in an amount of 190 mmol/kg or less makes it easier to increase the molecular weight of the second resin.

Thus, the present embodiment can provide a thermosetting resin composition that forms a cured product having even higher toughness.

### First resin which is thermosetting resin

The first resin which is a thermosetting resin contains a first functional group capable of reacting with the second functional group.

Examples of the first functional group include an epoxy group, a hydroxy group, an isocyanate group, an oxazoline group, an acid anhydride, a carboxylic acid, an amino group, an ester group, and a thiol group.

Examples of the thermosetting resin include an epoxy resin, a phenolic resin, an unsaturated polyester resin, a vinyl ester resin, an acrylic resin, a urea resin, a melamine resin, an aniline resin, a polyimide resin, and a bismaleimide resin. A single type of the thermosetting resin may be used alone, or two or more types of the thermosetting resins may be used in combination.

The thermosetting resin is preferably an epoxy resin or a phenolic resin, and particularly preferably an epoxy resin.

Since the resin particles containing a polyamide resin are easily dispersed in the epoxy resin, the thermosetting resin containing the epoxy resin makes it easier to exhibit the toughness improving effect of the resin particles.

Examples of the epoxy resin include a glycidyl ether type epoxy resin, a glycidyl amine type epoxy resin, a glycidyl ester type epoxy resin, an alkene oxide (e.g., vinylcyclohexene dioxide), and triglycidyl isocyanurate.

Examples of the glycidyl ether type epoxy resin include a bisphenol type epoxy resin, a phenol type epoxy resin, a dicyclopentadiene type epoxy resin, an epoxy resin having an aromatic skeleton (polyglycidyl ether), an alkanediol diglycidyl ether, a polyalkanediol diglycidyl ether, and an epoxy resin having an aliphatic skeleton (polyglycidyl ether).

Examples of the bisphenol type epoxy resin include a reaction product of a bisphenol and epichlorohydrin, and a reaction product of an alkylene oxide adduct of a bisphenol and epichlorohydrin.

Examples of the bisphenol include a bisphenol A type epoxy resin, a bisphenol F type epoxy resin, a bisphenol S type epoxy resin, and a brominated bisphenol type epoxy resin.

**In** the alkylene oxide adduct of the bisphenol, the number of moles of the alkylene oxide added per mol of the hydroxyl group of the bisphenol is, for example, 1 mol or more (e.g., from 1 to 20 mol), preferably from 1 to 15 mol, and more preferably from 1 to 10 mol.

Examples of the phenol type epoxy resin include a phenol novolac type epoxy resin, a cresol novolac type epoxy resin, a naphthol novolac type epoxy resin, a bisphenol A novolac type epoxy resin, a bisphenol F novolac type epoxy resin, a biphenyl skeleton-containing phenol novolac resin, and a xylylene skeleton-containing phenol novolac resin.

Examples of the epoxy resin having an aromatic skeleton (polyglycidyl ether) include a glycidyl ether having a naphthalene skeleton.

Examples of the glycidyl ether having a naphthalene skeleton include a di(glycidyloxy)naphthalene and bis[2,7-di(glycidyloxy)naphthyl]methane.

Examples of the di(glycidyloxy)naphthalene include 1,5-di(glycidyloxy)naphthalene.

Examples of the alkanediol diglycidyl ether include a C₂₋₁₀ alkanediol diglycidyl ether.

Examples of the C₂₋₁₀ alkanediol diglycidyl ether include butanediol diglycidyl ether, neopentyl glycol diglycidyl ether, and 1,6-hexanediol diglycidyl ether.

Examples of the polyalkanediol diglycidyl ether include a poly(C₂₋₄ alkanediol) diglycidyl ether.

Examples of the poly(C₂₋₄ alkanediol) diglycidyl ether include poly(propylene glycol) diglycidyl ether.

Examples of the epoxy resin having an aliphatic skeleton (polyglycidyl ether) include a glycidyl polyether of a polyol.

Examples of the polyol include an alkanetriol, an alkanetetraol, an alkanepentaol, and an alkanehexaol. Examples of the alkanetriol include a C₃₋₁₀ alkanetriol. Examples of the alkanetetraol include a C₃₋₁₀ alkanetetraol.

Examples of the glycidyl polyether include diglycidyl ether, triglycidyl ether, tetraglycidyl ether, pentaglycidyl ether, and hexaglycidyl ether.

Examples of the glycidyl polyether of a polyol include trimethylolpropane diglycidyl ether, trimethylolpropane triglycidyl ether, glycerin diglycidyl ether, and glycerin triglycidyl ether.

Examples of the glycidylamine type epoxy resin include tetraglycidyl diaminodiphenylmethane, triglycidyl-p-aminophenol, triglycidyl aminocresol, diglycidylaniline, and N,N-diglycidyl-4-glycidyloxyaniline.

Examples of the glycidyl ester type epoxy resin include a diglycidyl ester of a dicarboxylic acid.

Examples of the dicarboxylic acid include an aromatic dicarboxylic acid and a hydrogenated product of an aromatic dicarboxylic acid.

Examples of the aromatic dicarboxylic acid include terephthalic acid, isophthalic acid, phthalic acid, tetrahydrophthalic acid, and hexahydrophthalic acid.

A single type of the epoxy resin may be used alone, or two or more types of the epoxy resins may be used in combination.

Among these epoxy resins, in terms of strength and the like, an epoxy resin having an aromatic skeleton is preferred, and a bisphenol type epoxy resin is particularly preferred.

Examples of the phenolic resin include a resin having one or more, preferably two or more phenolic hydroxy groups per molecule.

Examples of the phenolic resin include a novolac type phenolic resin, a resol type phenolic resin, and a polyoxystyrene resin.

The novolac type phenolic resin is a phenol, an aldehyde, and a condensate. The novolac type phenolic resin is formed, for example, by condensation polymerization of a phenol and an aldehyde in the presence of an acidic catalyst.

The resol type phenolic resin is a phenol, an aldehyde, and a condensate. The resol type phenolic resin is formed, for example, by condensation polymerization of a phenol and an aldehyde in the presence of an alkaline catalyst.

Examples of the phenol include phenol, cresol, trimethylphenol, xylenol, resorcinol, catechol, butylphenol, octylphenol, nonylphenol, phenylphenol, dihydroxybenzene, bisphenol A, and naphthol.

Examples of the cresol include o-cresol, m-cresol, and p-cresol.

Examples of the trimethylphenol include 2,3,5-trimethylphenol.

Examples of the xylenol include 2,3-xylenol, 2,4-xylenol, 2,5-xylenol, 3,4-xylenol, and 3,5-xylenol.

Examples of the aldehyde include formaldehyde, paraformaldehyde, acetaldehyde, benzaldehyde, hydroxybenzaldehyde, glyoxal, glutaraldehyde, terephthalaldehyde, isophthalaldehyde, propionaldehyde, butyraldehyde, isobutyraldehyde, 3-methylbutyraldehyde, p-tolylaldehyde, and phenylacetaldehyde.

Examples of the hydroxybenzaldehyde include o-hydroxybenzaldehyde, m-hydroxybenzaldehyde, and p-hydroxybenzaldehyde.

Examples of the novolac type phenolic resin include a novolac resin (a condensate of phenol and formaldehyde) and a cresol novolac resin (a condensate of cresol and formaldehyde).

A single type of the phenolic resin may be used alone, or two or more types of the phenolic resins may be used in combination.

A hydroxy equivalent of the phenolic resin is preferably from 50 to 500 g/eq. and more preferably from 100 to 350 g/eq.

The thermosetting resin composition according to the present embodiment contains the thermosetting resin in an amount of preferably from 40 to 99 wt.% and more preferably from 80 to 97 wt.%.

### Resin particles

The resin particles are formed of a resin composition for resin particles containing a second resin having an amide bond and a second functional group.

The second functional group is a functional group capable of reacting with the first functional group.

The second functional group is preferably one or more functional groups selected from the group consisting of an amino group, a carboxy group, an isocyanate group, an oxazoline group, a carboxylic acid, an ester group, a thiol group, and a carboxylic anhydride group.

Examples of the amino group include "-NH₂" and "-NHR".

R is an alkyl group. Examples of R include a methyl group, an ethyl group, and a propyl group.

Examples of the second resin include a polyamide resin, a polyimide resin, and a polyamide-imide resin.

Examples of the polyamide resin include an aliphatic polyamide resin, an alicyclic polyamide resin (also referred to as "alicyclic polyamide resin"), and an aromatic polyamide resin.

The polyamide resin may be a homopolyamide resin or a copolyamide resin.

Examples of the aliphatic polyamide resin include a polyamide resin of an aliphatic diamine component and an aliphatic dicarboxylic acid component; a polyamide resin of a lactam; a polyamide resin of an aminocarboxylic acid; and a polyamide resin of an aliphatic diamine component, an aliphatic dicarboxylic acid component, and a lactam and/or an aminocarboxylic acid.

Examples of the aliphatic diamine component include a C4-16 alkylenediamine (for example, tetramethylenediamine, hexamethylenediamine, and dodecanediamine). The aliphatic diamine component is preferably a C6-14 alkylenediamine, and more preferably a C6-12 alkylenediamine.

Examples of the aliphatic dicarboxylic acid component include a C4-20 alkane dicarboxylic acid (for example, adipic acid, sebacic acid, and dodecanedioic acid). The aliphatic dicarboxylic acid component is preferably a C5-16 alkane dicarboxylic acid, and more preferably a C6-14 alkane dicarboxylic acid.

Examples of the lactam include a lactam having from 4 to 20 carbon atoms (for example, ε-caprolactam and ω-laurolactam). The lactam is preferably a lactam having from 4 to 16 carbon atoms.

Examples of the aminocarboxylic acid include C4-20 aminocarboxylic acids (for example, ω-aminoundecanoic acid). The aminocarboxylic acid is preferably a C4-16 aminocarboxylic acid, and more preferably a C6-14 aminocarboxylic acid.

Examples of the aliphatic polyamide resin include polyamide 6 (PA6), polyamide 11 (PA11), polyamide 12 (PA12), polyamide 46 (PA46), polyamide 66 (PA66), polyamide 610 (PA610), polyamide 611 (PA611), polyamide 612 (PA612), polyamide 613 (PA613), polyamide 1010 (PA1010), polyamide 66/11 (PA66/11), polyamide 66/12 (PA66/12), and polyamide 6/12/612 (PA6/12/612).

Examples of the alicyclic polyamide resin include a polyamide resin containing at least one selected from an alicyclic diamine component and an alicyclic dicarboxylic acid component as a constituent component.

The alicyclic polyamide resin is preferably an alicyclic polyamide resin containing, as a diamine component and a dicarboxylic acid component, the aliphatic diamine component and/or the aliphatic dicarboxylic acid component exemplified above together with the alicyclic diamine component and/or the alicyclic dicarboxylic acid component. Such alicyclic polyamide resins are highly transparent and are known as so-called transparent polyamide resins.

Examples of the alicyclic diamine component include a diaminocycloalkane, a bis(aminocycloalkyl)alkane, and hydrogenated xylylenediamine.

Examples of the diaminocycloalkane include diaminocyclohexane. The diaminocycloalkane is preferably a diamino C5-10 cycloalkane.

Examples of the bis(aminocycloalkyl)alkane include bis(4-aminocyclohexyl)methane, bis(4-amino-3-methylcyclohexyl)methane, and 2,2-bis(4'-aminocyclohexyl)propane. The bis(aminocycloalkyl)alkane is preferably a bis(amino C5-8 cycloalkyl)C1-3 alkane.

The alicyclic diamine component may include a substituent such as an alkyl group.

The alkyl group is preferably a C1-6 alkyl group, more preferably a C1-4 alkyl group, and even more preferably a C1-2 alkyl group (such as a methyl group or an ethyl group).

Examples of the alicyclic dicarboxylic acid include cycloalkane dicarboxylic acids (for example, cyclohexane-1,4-dicarboxylic acid and cyclohexane-1,3-dicarboxylic acid).

Examples of representative alicyclic polyamide resins include condensates of an alicyclic diamine component [such as a bis(aminocyclohexyl)alkane] and an aliphatic dicarboxylic acid component [such as an alkane dicarboxylic acid (for example, a C₄₋₂₀ alkane dicarboxylic acid component)].

The aromatic polyamide resin is a concept including a polyamide resin containing at least one of an aromatic diamine component or an aromatic dicarboxylic acid component as a constituent unit.

Examples of the aromatic polyamide resin include polyamide resins in which both the diamine component as a constituent unit and the dicarboxylic acid component as a constituent unit are aromatic components (also referred to as "wholly aromatic polyamide resins", "aramids", or the like).

The aromatic polyamide resin may be a modified polyamide resin. Examples of the modified polyamide resin include polyamide resins having a branched chain structure.

Examples of the aromatic diamine component include metaxylylenediamine.

Examples of the aromatic dicarboxylic acid component include terephthalic acid and isophthalic acid. The aromatic dicarboxylic acid component may be a dimer acid or the like.

Examples of the polyimide resin include an aliphatic polyimide resin and an aromatic polyimide resin.

Examples of the polyimide resin include imidized products of polyamic acid (precursor of polyimide resin), which is a polymer of tetracarboxylic dianhydride and a diamine compound.

Specific examples of the tetracarboxylic dianhydride include pyromellitic dianhydride, 3,3',4,4'-benzophenone tetracarboxylic dianhydride, 3,3',4,4'-biphenyl tetracarboxylic dianhydride, 2,3,3',4-biphenyl tetracarboxylic dianhydride, 2,3,6,7-naphthalene tetracarboxylic dianhydride, 1,2,5,6-naphthalene tetracarboxylic dianhydride, 1,4,5,8-naphthalene tetracarboxylic dianhydride, 2,2'-bis(3,4-dicarboxyphenyl)sulfonic dianhydride, perylene-3,4,9,10-tetracarboxylic dianhydride, bis(3,4-dicarboxyphenyl)ether dianhydride, and ethylene tetracarboxylic dianhydride.

Specific examples of the diamine compound serving as a raw material for the polyimide resin include 4,4'-diaminodiphenyl ether, 4,4'-diaminodiphenyl methane, 3,3'-diaminodiphenyl methane, 3,3'-dichlorobenzidine, 4,4'-diaminodiphenyl sulfide, 3,3'-diaminodiphenyl sulfone, 1,5-diaminonaphthalene, m-phenylenediamine, p-phenylenediamine, 3,3'-dimethyl-4,4'-biphenyldiamine, benzidine, 3,3'-dimethylbenzidine, 3,3'-dimethoxybenzidine, 4,4'-diaminodiphenyl sulfone, 4,4'-diaminodiphenyl propane, 2,4-bis(β-amino-tert-butyl)toluene, bis(p-β-amino-tert-butylphenyl)ether, bis(p-β-methyl-δ-aminophenyl)benzene, bis-p-(1,1-dimethyl-5-amino-pentyl)benzene, 1-isopropyl-2,4-m-phenylenediamine, m-xylylenediamine, p-xylylenediamine, di(p-aminocyclohexyl)methane, hexamethylenediamine, heptamethylenediamine, octamethylenediamine, nonamethylenediamine, decamethylenediamine, diaminopropyltetramethylene, 3-methylheptamethylenediamine, 4,4-dimethylheptamethylenediamine, 2,11-diaminododecane, 1,2-bis-3-aminoproxyethane, 2,2-dimethylpropylenediamine, 3-methoxyhexamethylenediamine, 2,5-dimethylheptamethylenediamine, 3-methylheptamethylenediamine, 5-methylnonamethylenediamine, 2,17-diaminoeicosadecane, 1,4-diaminocyclohexane, 1,10-diamino-1,10-dimethyldecane, 12-diaminooctadecane, 2,2-bis[4-(4-aminophenoxy)phenyl]propane, piperazine, H₂N(CH₂)₃O(CH₂)₂O(CH₂)NH₂, H₂N(CH₂)₃S(CH₂)₃NH₂, and H₂N(CH₂)₃N(CH₃)₂(CH₂)₃NH₂.

Examples of the polyamide-imide resin include a resin having an imide bond and an amide bond in a repeating unit.

More specifically, examples of the polyamide-imide resin include a polymer of a trivalent carboxylic acid compound (also referred to as tricarboxylic acid) having an acid anhydride group and a diisocyanate compound or a diamine compound.

As the tricarboxylic acid, trimellitic anhydride and a derivative thereof are preferable.

Examples of the diisocyanate compound include 3,3'-dimethylbiphenyl-4,4'-diisocyanate, 2,2'-dimethylbiphenyl-4,4'-diisocyanate, biphenyl-4,4'-diisocyanate, biphenyl-3,3'-diisocyanate, biphenyl-3,4'-diisocyanate, 3,3'-diethylbiphenyl-4,4'-diisocyanate, 2,2'-diethylbiphenyl-4,4'-diisocyanate, 3,3'-dimethoxybiphenyl-4,4'-diisocyanate, 2,2'-dimethoxybiphenyl-4,4'-diisocyanate, naphthalene-1,5-diisocyanate, and naphthalene-2,6-diisocyanate.

Examples of the diamine compound serving as a raw material for the polyamide-imide resin include those listed as the diamine compound serving as a raw material for the polyimide resin.

The second resin preferably contains a polyamide resin.

The polyamide resin preferably includes an aliphatic polyamide resin and/or an alicyclic polyamide resin, and more preferably includes an alicyclic polyamide resin.

The second resin contains the second functional group in an amount of from 25 to 190 mmol/kg, preferably from 29 to 175 mmol/kg, and more preferably from 29 to 120 mmol/kg.

The concentration of the second functional group in the second resin means a total concentration of the amino group, the carboxy group, the isocyanate group, and the carboxylic anhydride group in the second resin.

A concentration of the amino group in the resin such as the second resin can be determined as follows.

First, phenol and ethanol are mixed at a volume ratio of 10: 1 to prepare a phenol/ethanol solvent.

Next, the weighed resin is dissolved in 40 mL of the phenol/ethanol solvent, and thereby a first solution is produced.

Then, 10 mL of ethanol is added to the first solution, and thereby a second solution is produced.

Next, the second solution is titrated with an aqueous N/100 hydrochloric acid solution to determine the concentration of the amino group in the resin.

A total concentration of the carboxy group and the carboxylic anhydride group in the resin can be determined as follows.

First, the weighed resin is dissolved in 50 mL of benzyl alcohol in an oil bath at 180°C, and thereby a solution is produced.

Next, phenolphthalein is used as an indicator, and the solution is titrated with an N/100 potassium hydroxide-ethanol solution to determine the total concentration of the carboxy group and the carboxylic anhydride group in the resin.

When the resin does not include a carboxylic anhydride group, the concentration determined by the titration means the concentration of the carboxy group in the resin.

Furthermore, a concentration of the isocyanate group in the resin can be determined based on JIS K1603-1:2007.

The concentration of the second functional group contained in the resin having the second functional group can be reduced by, for example, a carbodiimide compound.

Specifically, the resin having the second functional group and the carbodiimide compound are melt-kneaded using an extruder having a cylinder (the cylinder temperature of, for example, from 190 to 320°C, more specifically from 210 to 290°C), and thereby a melt-kneaded product is produced. Next, the melt-kneaded product is discharged from the extruder, and the discharged rod-shaped melt-kneaded product is cooled. Then, the rod-shaped melt-kneaded product is cut, and thereby pellets are produced. Next, the pellets are dried with a dehumidifying dryer (for example, from 70 to 90°C), thereby making it possible to produce a pellet-shaped resin having a reduced concentration of the second functional group.

The carbodiimide compound is a compound having a carbodiimide group (-N=C=N-). Examples of the carbodiimide compound include a monofunctional carbodiimide compound having only one carbodiimide group (-N=C=N-) per molecule and a polyfunctional carbodiimide compound having two or more carbodiimide groups (-N=C=N-) per molecule.

Examples of the carbodiimide compound include an aliphatic carbodiimide compound having an aliphatic main chain, an alicyclic carbodiimide compound having an alicyclic main chain, and an aromatic carbodiimide compound having an aromatic main chain.

Examples of the aliphatic carbodiimide compound include diisopropylcarbodiimide, dioctyldecylcarbodiimide, di-tert-butylcarbodiimide, 1-ethyl-3-tert-butylcarbodiimide, 1-(2-butyl)-3-ethylcarbodiimide, 1,3-di-(2-butyl)carbodiimide, and poly(diisopropylcarbodiimide).

Examples of the alicyclic carbodiimide compound include dicyclohexylcarbodiimide and poly(diisopropylcarbodiimide).

Examples of the aromatic carbodiimide compound include diphenylcarbodiimide, di-2,6-dimethylphenylcarbodiimide, di-2,6-diethylphenylcarbodiimide, di-2,6-diisopropylphenylcarbodiimide, di-2,6-ditert-butylphenylcarbodiimide, N-triyl-N'-phenylcarbodiimide, N-(2,6-diisopropyl-4-phenoxyphenyl)-N-tert-butylcarbodiimide, N,N-bis[3-isocyanato-2,4,6-tris(1-methylethyl)phenylamino]carbodiimide, N-cyclohexyl-N-(4-(dimethylamino)naphthyl)carbodiimide, di-o-tolylcarbodiimide, di-p-tolylcarbodiimide, di-p-nitrophenylcarbodiimide, di-p-aminophenylcarbodiimide, dip-hydroxyphenylcarbodiimide, di-p-chlorophenylcarbodiimide, di-p-methoxyphenylcarbodiimide, di-3,4-dichlorophenylcarbodiimide, di-2,5-dichlorophenylcarbodiimide, di-o-chlorophenylcarbodiimide, di-2,4,6-trimethylphenylcarbodiimide, di-2,4,6-triisopropylphenylcarbodiimide, di-2,4,6-triisobutylphenylcarbodiimide, p-phenylene-bis-di-o-triylcarbodiimide, p-phenylene-bis-dicyclohexylcarbodiimide, p-phenylene-bis-di-p-chlorophenylcarbodiimide, ethylene-bis-diphenylcarbodiimide, poly(4,4'-diphenylmethanecarbodiimide), poly(p-phenylenecarbodiimide), poly(m-phenylenecarbodiimide), poly(3,3'-dimethyl-4,4'-diphenylmethanecarbodiimide), poly(naphthylenecarbodiimide), poly(1,3-diisopropylphenylenecarbodiimide), poly(1-methyl-3,5-diisopropylphenylenecarbodiimide), poly(1,3,5-triethylphenylenecarbodiimide), poly(diisopropylphenylenecarbodiimide), and poly(triisopropylphenylenecarbodiimide).

A single type of the carbodiimide compound may be used alone, or two or more types of the carbodiimide compounds may be used in combination.

The relative viscosity of the second resin is from 1.50 to 2.50, and preferably from 1.58 to 2.16.

The relative viscosity of a resin such as the second resin can be measured in accordance with JIS K6933:2013. The relative viscosity can be measured under the following conditions.
Solvent: m-cresol
Temperature: 25°C
Concentration of second resin in test solution: 0.005 g/mL

A glass transition temperature (Tg) (hereinafter, also referred to as "glass transition point") of the second resin is preferably from 30°C to 160°C, and more preferably from 30°C to 48°C.

In the present embodiment, the glass transition temperature (Tg) means midpoint glass transition temperature measured using a differential scanning calorimeter (DSC).

The midpoint glass transition temperature can be determined based on the method described in JIS K7121-1987 "Testing Methods for Transition Temperatures of Plastics".

That is, first, about 5 mg of a sample for measuring the midpoint glass transition temperature is prepared, and two metallic (e.g., aluminum) containers with the same shape and the same weight are prepared.

One of the two containers is then filled with the sample and the other container is left empty.

Then, the midpoint glass transition temperature can be determined from a DSC curve created when the container containing the sample and the empty container as a reference are set in a DSC, and the temperature of the sample is increased at a temperature increase rate of 10°C/min under a nitrogen gas stream.

The resin particles contain the second resin in an amount of preferably from 80 to 100 wt.%, more preferably from 90 to 100 wt.%, and even more preferably from 95 to 100 wt.%.

In addition, the resin particles may further contain an additive. In other words, the resin composition for the resin particles may further contain an additive.

Examples of the additive include a stabilizer, a colorant, a dispersant, a preservative, an antioxidant, and an antifoaming agent.

A single type of the additive may be used alone, or two or more types of the additives may be used in combination.

A total content ratio of the additives is, for example, 10 parts by weight or less (e.g., from 0.01 to 10 parts by weight) per 100 parts by weight of a total of the additives and the second resin.

A median size (D50) of the resin particles is preferably 50 µm or less, more preferably from 4 to 40 µm, and even more preferably from 8 to 32 µm.

The median size of the resin particles means a value determined by dispersing the resin particles in water and performing the measurement with a laser diffraction/scattering particle size distribution analyzer. In addition, the median size of the resin particles means a volume-based median size of the resin particles.

Furthermore, the median size of the resin particles means a median size of resin particles of primary particles.

A sphericity of the resin particles is preferably 75% or more and 100% or less, more preferably 85% or more and 100% or less, even more preferably 95% or more and 100% or less, particularly preferably 97% or more and 100% or less, and most preferably 99% or more and 100% or less.

Due to the sphericity of the resin particles being 75% or more, the toughness of the cured product is further increased.

In the present embodiment, the sphericity of the particles can be measured by the following method. The particles are observed with a scanning electron microscope (SEM) to measure the major axes and the minor axes of 30 randomly selected particles, and the minor axis/major axis ratio of each particle is determined. Then, the arithmetic mean value of the minor axis/major axis ratios is determined as the sphericity of the particles. The particles with a sphericity closer to 100% can be determined as a true sphere.

The thermosetting resin composition according to the present embodiment has the thermosetting resin and the resin particles in an amount of preferably from 50 to 99 wt.% and more preferably from 80 to 97 wt.%.

The thermosetting resin composition according to the present embodiment contains the resin particles in an amount of preferably from 1 to 20 parts by weight, more preferably from 3 to 18 parts by weight, and more preferably from 5 to 15 parts by weight per 100 parts by weight of the thermosetting resin.

### Method for manufacturing resin particles

Examples of the method for manufacturing the resin particles include a forced emulsification method, a freeze milling method, a chemical milling method, a polymerization method, and a laser method.

The method for manufacturing the resin particles is preferably a forced emulsification method.

In the forced emulsification method, the resin particles are produced by: (A) producing a melt-kneaded product by melt-kneading the second resin having an amide bond and an aqueous medium (hereinafter, also referred to as "water-soluble matrix") incompatible with the second resin having an amide bond by heating with an extruder; (B) discharging the melt-kneaded product from the extruder, thereby producing a rod-shaped melt-kneaded product, cooling the rod-shaped melt-kneaded product, and cutting the cooled rod-shaped melt-kneaded product, thereby obtaining a pellet-shaped pre-molded body; and (C) removing the aqueous medium from the pellet-shaped pre-molded body with a hydrophilic solvent or water.

**In** the forced emulsification method, the resin particles may be produced by (D) drying the pre-molded body with a dehumidifying dryer or the like after step (C) above, if necessary.

**In** addition, for the purpose of producing resin particles having a desired particle size, in the forced emulsification method, the resin particles may be produced by (E) classifying the pre-molded body after step (C) above (when step (D) above is carried out, after step (D) above or before step (D) above).

The aqueous medium used in step (A) above is selected according to the type of the second resin having an amide bond.

Examples of the aqueous medium include a heat-melting saccharide and a water-soluble macromolecule.

Examples of the heat-melting saccharide include an oligosaccharide (e.g., sucrose and maltotriose) and a sugar alcohol (e.g., xylitol, erythritol, sorbitol, and mannitol).

Examples of the water-soluble macromolecule include water-soluble synthetic macromolecules (for example, polyvinyl alcohol, a modified polyvinyl alcohol-based resin (modified PVA-based resin), polyethylene glycol, sodium polyacrylate, and polyacrylamide) and polysaccharides (for example, starch and methyl cellulose).

Examples of the modified polyvinyl alcohol-based resin include a modified polyvinyl alcohol having an alkyl group having at least one hydroxyl group in a side chain, and a modified polyvinyl alcohol having an alkyl chain having at least one hydroxyl group in a side chain.

A single type of the aqueous medium may be used alone or two or more types of the aqueous media may be used in combination.

A mixing ratio of the second resin with the aqueous medium is, for example, from 10 to 200 parts by weight, preferably from 30 to 150 parts by weight, and more preferably from 50 to 100 parts by weight of the second resin per 100 parts by weight of the aqueous medium.

A temperature during the melt-kneading in step (A) above is any temperature not lower than the melting point or softening point of the second resin and is, for example, 190°C or higher (e.g., from 190 to 350°C), preferably from 200 to 320°C, and more preferably from 210 to 300°C.

**In** step (B) above, the melt-kneaded product may be left to stand for cooling or may be subjected to forced cooling, but from the viewpoint of productivity, the melt-kneaded product is preferably subjected to forced cooling.

The cooling rate of the melt-kneaded product is preferably, for example, 1°C/min or more (e.g., from 1 to 30°C/min).

Examples of the hydrophilic solvent used in step (C) above include an alcohol (such as ethanol) and a water-soluble ketone (such as acetone).

### Monofunctional epoxy compound

When the thermosetting resin contains an epoxy resin, the thermosetting resin composition according to the present embodiment may contain a monofunctional epoxy compound.

Examples of the monofunctional epoxy compound include a monoglycidyl ether and an alkene oxide (e.g., octylene oxide and styrene oxide).

Examples of the monoglycidyl ether include an alkyl glycidyl ether (e.g., 2-ethylhexyl glycidyl ether), an alkenyl glycidyl ether (e.g., allyl glycidyl ether), and an aryl glycidyl ether (e.g., phenyl glycidyl ether).

**In** the thermosetting resin composition according to the present embodiment, a weight ratio of the epoxy resin to the monofunctional epoxy compound is, for example, from 99/1 to 50/50, preferably from 97/3 to 60/40, and more preferably from 95/5 to 70/30.

### Curing agent

The thermosetting resin composition according to the present embodiment may contain a curing agent.

The curing agent can be appropriately selected according to the type of thermosetting resin described above.

Examples of the curing agent when the thermosetting resin is an epoxy resin include an amine-based curing agent, a phenolic resin-based curing agent, an acid anhydride-based curing agent, a polymercaptan-based curing agent, and a latent curing agent.

Examples of the amine-based curing agent include an aromatic amine-based curing agent, an aliphatic amine-based curing agent, an imidazole, a salt of an imidazole, and an alicyclic amine-based curing agent.

Examples of the aromatic amine-based curing agent include a polyaminoarene, a polyamino-alkylarene, a poly(aminoalkyl)arene, a poly(aminoaryl)alkane, a poly(amino-alkylaryl)alkane, bis(aminoarylalkyl)arene, a di(aminoaryl)ether (e.g., diaminodiphenyl ether), di(aminoaryloxy)arene (e.g., 1,3-bis(3-aminophenoxy)benzene), and di(aminoaryl)sulfone (e.g., diaminodiphenyl sulfone).

Examples of the polyaminoarene include a diaminoarene (e.g., p-phenylenediamine and m-phenylenediamine).

Examples of the polyamino-alkylarene include a diamino-alkylarene (e.g., diethyltoluenediamine).

Examples of the poly(aminoalkyl)arene include a di(aminoalkyl)arene (e.g., xylylenediamine).

Examples of the poly(aminoaryl)alkane include a di(aminoaryl)alkane (e.g., diaminodiphenylmethane).

Examples of the poly(amino-alkylaryl)alkane include a di(amino-alkylaryl)alkane (e.g., 4,4'-methylene bis(2-ethyl-6-methylaniline)).

Examples of the bis(aminoarylalkyl)arene include 1,3-bis[2-(4-aminophenyl)-2-propyl)]benzene and 1,4-bis[2-(4-aminophenyl)-2-propyl)]benzene.

Examples of the aliphatic amine-based curing agent include ethylenediamine, hexamethylenediamine, diethylenetriamine, triethylenetetramine, tetraethylenepentamine, and diethylaminopropylamine.

Examples of the alicyclic amine-based curing agent include menthenediamine, isophoronediamine, bis(4-amino-3-methylcyclohexyl)methane, 3,9-bis(3-aminopropyl)-2,4,8,10-tetraoxaspiro[5.5]undecane, and norbomanediamine.

Examples of the imidazole include an alkylimidazole and an arylimidazole.

Examples of the alkylimidazole include 2-methylimidazole, 2-phenylimidazole, 2-heptadecylimidazole, and 2-ethyl-4-methylimidazole.

Examples of the arylimidazole include 2-phenylimidazole, 2-phenyl-4-methylimidazole, 2-phenyl-4-methyl-5-hydroxymethylimidazole, and 1-benzyl-2-phenylimidazole.

Examples of the salt of an imidazole include a salt of an imidazole and formic acid, a salt of an imidazole and phenol, a salt of an imidazole and a phenol novolac, and a salt of an imidazole and carbonic acid.

Examples of the phenolic resin-based curing agent include a novolac resin and a cresol novolac resin.

Examples of the acid anhydride curing agent include an aliphatic dicarboxylic anhydride, an alicyclic dicarboxylic anhydride, and an aromatic dicarboxylic anhydride.

Examples of the aliphatic dicarboxylic anhydride include dodecenylsuccinic anhydride.

Examples of the alicyclic dicarboxylic anhydride include tetrahydrophthalic anhydride, methyltetrahydrophthalic anhydride, and hexahydrophthalic anhydride.

Examples of the aromatic dicarboxylic anhydride include phthalic anhydride, trimellitic anhydride, pyromellitic anhydride, and benzophenonetetracarboxylic dianhydride.

Examples of the latent curing agent include a boron trifluoride-amine complex, dicyandiamide, and carboxylic acid hydrazide.

A single type of the curing agent may be used alone, or two or more types of the curing agents may be used in combination. The curing agent may act as a curing accelerator.

The curing agent is preferably an amine-based curing agent (e.g., an aromatic amine-based curing agent).

A content ratio of the curing agent can be appropriately selected according to the type of thermosetting resin (e.g., epoxy equivalent), the type of curing agent, and the like but is, for example, from 0.1 to 300 parts by weight, preferably from 1 to 250 parts by weight, more preferably from 3 to 200 parts by weight (e.g., from 4 to 150 parts by weight), and particularly preferably from 5 to 100 parts by weight per 100 parts by weight of the thermosetting resin.

### Curing accelerator

The thermosetting resin composition according to the present embodiment may contain a curing accelerator.

The curing accelerator can be appropriately selected according to the type of thermosetting resin described above.

Examples of the curing accelerator when the thermosetting resin is an epoxy resin include a phosphine, an amine, and a salt of an amine.

Examples of the phosphine include ethylphosphine, propylphosphine, trialkylphosphine, phenylphosphine, and triphenylphosphine.

Examples of the amine include a secondary and tertiary amine.

Examples of the secondary and tertiary amine include triethylamine, piperidine, benzyldimethylamine, triethanolamine, dimethylaminoethanol, triethylenediamine, tris(dimethylaminomethyl)phenol, and N,N-dimethylpiperazine.

A single type of the curing accelerator may be used alone, or two or more types of the curing accelerators may be used in combination.

A content ratio of the curing accelerator is, for example, from 0.01 to 100 parts by weight, preferably from 0.05 to 50 parts by weight, and more preferably from 1 to 30 parts by weight per 100 parts by weight of the thermosetting resin.

### Additional component

The thermosetting resin composition according to the present embodiment may further contain at least one of a thermoplastic resin or an additive as an additional component as necessary.

Examples of the thermoplastic resin include an acrylic resin, a polyolefin resin (e.g., polypropylene), a polyamide resin, a polyester resin, a polycarbonate resin, a poly(phenylene ether) resin, a poly(phenylene sulfide) resin, a polysulfone resin, a poly(ether ketone) resin, a poly(ether ether ketone) resin, a polyimide resin, and a poly(ether imide) resin.

Examples of the polyester resin include an aromatic polyester resin (e.g., poly(ethylene terephthalate)).

Examples of the additive include a non-fibrous filler, a stabilizer, a colorant, a dispersant, a preservative, an antioxidant, and an antifoaming agent.

A content ratio of the additional component is, for example, 10 parts by weight or less (e.g., from 0.01 to 10 parts by weight) per 100 parts by weight of the thermosetting resin.

### Cured Product

A cured product according to the present embodiment is a cured product formed by thermally curing the thermosetting resin composition according to the present embodiment.

A shape of the cured product according to the present embodiment may be a one-dimensional shape (such as a rod shape), a two-dimensional shape (such as a sheet shape), or a three-dimensional shape.

### Prepreg

The prepreg according to the present embodiment is a prepreg in which an aggregate of reinforcing fibers is impregnated or infused with the thermosetting resin composition according to the present embodiment.

That is, the prepreg according to the present embodiment includes a thermosetting resin composition and reinforcing fibers.

A fiber-reinforced plastic can be produced by thermally curing the prepreg according to the present embodiment (specifically, thermally curing the thermosetting resin composition included in the prepreg).

Examples of the reinforcing fibers include carbon fibers, glass fibers, aramid fibers, boron fibers, polyparaphenylene-benzobis-oxazole (PBO) fibers, polyethylene fibers, alumina fibers, and silicon carbide fibers.

The reinforcing fibers are preferably carbon fibers.

The reinforcing fibers may be monofilaments or multifilaments.

A fineness of a single fiber of the reinforcing fibers is preferably from 0.2 to 2.0 dtex, and more preferably from 0.4 to 1.8 dtex.

When the reinforcing fibers are multifilaments, the number of filaments in the fibers is preferably from 2500 to 50000.

The reinforcing fibers may be continuous fibers or may be in a discontinuous form.

When the cured product is required to have higher mechanical properties, the reinforcing fibers are preferably continuous fibers.

The continuous fibers may be included in the prepreg according to the present embodiment in the form of, for example, a unidirectional base material, a knitted fabric, a woven fabric, a tow, or a roving.

The reinforcing fibers in a discontinuous form may be included in the prepreg according to the present embodiment in the form of, for example, a nonwoven fabric or a chopped yarn.

The thermosetting resin composition may be included in the prepreg in a liquid state or in a solid state.

The prepreg according to the present embodiment is a concept including a tow prepreg. The tow prepreg is a prepreg including a tow (bundle of reinforcing fibers) and a solid thermosetting resin composition.

The prepreg according to the present embodiment includes the reinforcing fibers in an amount of preferably from 1 to 50 parts by weight, and more preferably from 5 to 30 parts by weight per 100 parts by weight of the thermosetting resin.

### Fiber-reinforced plastic

The fiber-reinforced plastic according to the present embodiment includes the cured product according to the present embodiment and the reinforcing fibers.

The fiber-reinforced plastic according to the present embodiment is also referred to as "fiber-reinforced macromolecule composite material" or "FRP".

In the fiber-reinforced plastic according to the present embodiment, the reinforcing fibers are preferably carbon fibers. In other words, the fiber-reinforced plastic according to the present embodiment is preferably a carbon fiber-reinforced plastic (CFRP).

The fiber-reinforced plastic according to the present embodiment is formed by thermally curing the prepreg according to the present embodiment.

That is, the fiber-reinforced plastic according to the present embodiment can be produced by thermally curing the prepreg according to the present embodiment.

For example, the fiber-reinforced plastic according to the present embodiment may be produced by a filament winding method.

**In** the filament winding method, a fiber-reinforced plastic having a desired shape can be produced by winding up, with a mandrel, a thread-shaped prepreg including a tow (a bundle of reinforcing fibers) and a thermosetting resin composition, thereby producing a prepreg having a desired shape (for example, a cylindrical shape or a tank shape), and thermally curing the prepreg (thermally curing the thermosetting resin composition included in the prepreg).

Examples of the filament winding method include a wet method and a dry method.

In the wet method, a prepreg is produced by adding a tow (a bundle of reinforcing fibers) to a liquid thermosetting resin composition, and the prepreg including the liquid thermosetting resin composition is wound up with a mandrel.

**In** the dry method, a tow prepreg is wound up with a mandrel. **In** the dry method, a fiber-reinforced plastic having a desired shape can be easily produced by using a tow prepreg produced in advance.

The fiber-reinforced plastic according to the present embodiment preferably has two or more layers containing the reinforcing fibers from the viewpoint of enhancing mechanical efficiency.

Examples of the fiber-reinforced plastic having two or more layers containing the reinforcing fibers include a fiber-reinforced plastic having two or more layers containing an aggregate of reinforcing fibers.

The fiber-reinforced plastic having two or more layers containing the reinforcing fibers can be produced, for example, as follows.

The fiber-reinforced plastic having two or more layers containing the reinforcing fibers can be produced by superposing a plurality of prepreg layers and thermally curing the superposed prepreg layers.

Also, the fiber-reinforced plastic having two or more layers containing the reinforcing fibers can be produced by superposing two or more layers of aggregates of reinforcing fibers, thereby producing a laminate, and impregnating or infusing the laminate with the thermosetting resin composition.

### Molded article

The molded article according to the present embodiment is a molded article formed from the cured product according to the present embodiment.

The molded article according to the present embodiment is a concept including a molded article formed from the fiber-reinforced plastic according to the present embodiment.

Examples of the molded article according to the present embodiment include an aircraft body, a golf club shaft, a fishing rod, and a tank (specifically, a highpressure tank).

### Disclosure Item

Each of the following items discloses a preferred embodiment.

### Item 1

A thermosetting resin composition containing:
a first resin which is a thermosetting resin; and
resin particles containing a second resin having an amide bond,
wherein
the second resin contains one or more second functional groups selected from the group consisting of an amino group, a carboxy group, an isocyanate group, and a carboxylic anhydride group,
the first resin contains a first functional group capable of reacting with the one or more second functional groups,
the second resin contains the one or more second functional groups in an amount of from 25 to 190 mmol/kg, and
the second resin has a relative viscosity of from 1.50 to 2.50.

### Item 2

The thermosetting resin composition according to Item 1, wherein the second resin contains a polyamide resin.

### Item 3

The thermosetting resin composition according to Item 2, wherein the polyamide resin includes an aliphatic polyamide resin and/or an alicyclic polyamide resin.

### Item 4

The thermosetting resin composition according to Item 3, wherein the polyamide resin includes the alicyclic polyamide resin.

### Item 5

The thermosetting resin composition according to any one of Items 1 to 4, wherein the resin particles have a median size of 50 µm or less.

### Item 6

The thermosetting resin composition according to any one of Items 1 to 5, wherein the resin particles have a sphericity of 75% or more.

### Item 7

The thermosetting resin composition according to any one of Items 1 to 6, wherein the second resin has a glass transition point of from 30 to 160°C.

### Item 8

The thermosetting resin composition according to Item 7, wherein the second resin has a glass transition temperature of from 30 to 48°C.

### Item 9

The thermosetting resin composition according to any one of Items 1 to 8, wherein the second resin contains the one or more second functional groups in an amount of from 29 to 120 mmol/kg.

### Item 10

The thermosetting resin composition according to any one of Items 1 to 9, wherein the first resin contains an epoxy resin.

### Item 11

The thermosetting resin composition according to any one of Items 1 to 10, wherein the thermosetting resin composition contains the resin particles in an amount of from 1 to 20 parts by weight per 100 parts by weight of the first resin.

### Item 12

A cured product formed by thermally curing the thermosetting resin composition described in any one of Items 1 to 11.

### Item 13

A prepreg in which an aggregate of reinforcing fibers is impregnated or infused with the thermosetting resin composition described in any one of Items 1 to 11.

### Item 14

A molded article formed from the cured product described in Item 12.

### Item 15

A fiber-reinforced plastic including:
the cured product described in Item 12; and
a reinforcing fiber.

### Item 16

The fiber-reinforced plastic according to Item 15, wherein the fiber-reinforced plastic has two or more layers containing the reinforcing fiber.

### Examples

Next, the present disclosure will be described more specifically with reference to examples and comparative examples. Note that the present disclosure is not limited to these examples at all.

### Water-Soluble Matrix

The following water-soluble matrices were prepared.

Modified PVA-based resin 1 (hereinafter also referred to as "modified PVA1"): modified PVA-based resin prepared by the method described in paragraphs [0119] to [0121] of JP 2019-1942 A ("modified PVA-based resin 2" described in JP 2019-1942 A)

Modified PVA-based resin 2 (hereinafter also referred to as "modified PVA2"): modified PVA-based resin prepared by the method described in paragraphs [0112] to [0115] of JP 2019-1942 A ("modified PVA-based resin 1" described in JP 2019-1942 A)

Sugar alcohol: D-Sorbitol LTS powder 20 M, available from Mitsubishi Shoji Foodtech Co., Ltd.

### Extruder

The following extruders (extruders having a cylinder) were prepared.

"TEX30XSST" (hereinafter also simply referred to as "TEX30") available from The Japan Steel Works, Ltd.

"Labo Plastomill" (hereinafter also simply referred to as "Plastomill") available from Toyo Seiki Seisaku-sho, Ltd.

### Examples 1 to 3, 5 to 8, and 11 to 16, and Comparative Example 12

The water-soluble matrices and the raw material resin were melt-kneaded using the extruder under the conditions shown in Table 1 below, and the melt-kneaded product was discharged.

The raw material resin is a polyamide resin available from Polyplastics-Evonik Corporation.

The discharged melt-kneaded product was cooled and cut, and thereby a pellet-shaped pre-molded body was produced. The pre-molded body was put into water and stirred, the water-soluble matrices were eluted, and thereby a slurry was produced. The slurry was passed through a mesh (the opening of 250 µm), and the slurry passed through the mesh was filtered with a filter paper to collect precursor particles passed through the mesh and remaining on a filter paper. The precursor particles were naturally dried at a temperature of 23°C and a humidity of 50% RH, and thereby resin particles (powder) were produced.

Next, the resin particles and an epoxy resin ("jER 828" available from Mitsubishi Chemical Corporation) as a thermosetting resin were stirred for 6 hours under the conditions of 80°C and 300 rpm using a hot stirrer, and thereby a mixture was produced.

Then, the mixture was allowed to stand in a vacuum vessel for one hour and thereby the mixture was defoamed.

Next, an amine-based curing agent ("jER Cure W" available from Mitsubishi Chemical Corporation) was added to the defoamed mixture, the mixture was stirred and defoamed, and thereby a thermosetting resin composition (containing 14.4 wt.% of resin particles) was produced.

### Example 4

Using the extruder ("TEX30" available from The Japan Steel Works, Ltd.), 100 parts by weight of the raw material resin of Example 2 and 1.5 parts by weight of a carbodiimide compound (Stabaxol I Powder, available from LANXESS) were melt-kneaded (the cylinder temperature of 220°C), and thereby a melt-kneaded product was produced. Next, the melt-kneaded product was discharged from the extruder, and the discharged rod-shaped melt-kneaded product was cooled. Then, the rod-shaped melt-kneaded product was cut, and thereby pellets were produced. Next, the pellets were dried at 80°C for 4 hours using a dehumidifying dryer, and thereby dried pellets (raw material resin) were produced.

Resin particles were produced in the same manner as in Example 1 except that the raw material resin was used and that the conditions shown in the following Table 1 were employed, and then a thermosetting resin composition was produced.

### Example 9

Using the extruder ("TEX30" available from The Japan Steel Works, Ltd.), 90 parts by weight of the raw material resin of Example 5 and 10 parts by weight of PA12 (the carboxy group concentration of 5 mmol/kg, the amino group concentration of 400 mmol/kg, the relative viscosity of 1.33) available from Polyplastics-Evonik Corporation were melt-kneaded (the cylinder temperature of 220°C), and thereby a melt-kneaded product was produced. Next, the melt-kneaded product was discharged from the extruder, and the discharged rod-shaped melt-kneaded product was cooled. Then, the rod-shaped melt-kneaded product was cut, and thereby pellets were produced. Next, the pellets were dried at 80°C for 4 hours using a dehumidifying dryer, and thereby dried pellets (raw material resin) were produced.

Resin particles were produced in the same manner as in Example 1 except that the raw material resin was used and that the conditions shown in the following Table 1 were employed, and then a thermosetting resin composition was produced.

### Example 10

Using the extruder ("TEX30" available from The Japan Steel Works, Ltd.), 85 parts by weight of the raw material resin of Example 5 and 15 parts by weight of PA12 (the carboxy group concentration of 5 mmol/kg, the amino group concentration of 400 mmol/kg, the relative viscosity of 1.33) available from Polyplastics-Evonik Corporation were melt-kneaded (the cylinder temperature of 220°C), and thereby a melt-kneaded product was produced. Next, the melt-kneaded product was discharged from the extruder, and the discharged rod-shaped melt-kneaded product was cooled. Then, the rod-shaped melt-kneaded product was cut, and thereby pellets were produced. Next, the pellets were dried at 80°C for 4 hours using a dehumidifying dryer, and thereby dried pellets (raw material resin) were produced.

Resin particles were produced in the same manner as in Example 1 except that the raw material resin was used and that the conditions shown in the following Table 1 were employed, and then a thermosetting resin composition was produced.

### Comparative Example 1

A thermosetting resin composition was produced in the same manner as in Example 1 except that no resin particle was used.

### Comparative Example 2

Using the extruder ("TEX30" available from The Japan Steel Works, Ltd.), 100 parts by weight of the raw material resin of Example 2 and 2.5 parts by weight of a carbodiimide compound (Stabaxol I Powder, available from LANXESS) were melt-kneaded (the cylinder temperature of 220°C), and thereby a melt-kneaded product was obtained. Next, the melt-kneaded product was discharged from the extruder, and the discharged rod-shaped melt-kneaded product was cooled. Then, the rod-shaped melt-kneaded product was cut, and thereby pellets were produced. Next, the pellets were dried at 80°C for 4 hours using a dehumidifying dryer, and thereby dried pellets (raw material resin) were produced.

Resin particles were produced in the same manner as in Example 1 except that the raw material resin was used and that the conditions shown in the following Table 1 were employed, and then a thermosetting resin composition was produced.

### Comparative Example 3

Using the extruder ("TEX30" available from The Japan Steel Works, Ltd.), 100 parts by weight of an amorphous alicyclic polyamide available from Polyplastics-Evonik Corporation and 4 parts by weight of a carbodiimide compound (Stabaxol I Powder, available from LANXESS) were melt-kneaded (the cylinder temperature of 280°C), and thereby a melt-kneaded product was produced. Next, the melt-kneaded product was discharged from the extruder, and the discharged rod-shaped melt-kneaded product was cooled. Then, the rod-shaped melt-kneaded product was cut, and thereby pellets were produced. Next, the pellets were dried at 80°C for 4 hours using a dehumidifying dryer, and thereby dried pellets (raw material resin) were produced.

Resin particles were produced in the same manner as in Example 1 except that the raw material resin was used and that the conditions shown in the following Table 1 were employed, and then a thermosetting resin composition was produced.

### Comparative Example 4

Using the extruder ("TEX30" available from The Japan Steel Works, Ltd.), 100 parts by weight of an amorphous alicyclic polyamide available from Polyplastics-Evonik Corporation and 4 parts by weight of a carbodiimide compound (Stabaxol I Powder, available from LANXESS) were melt-kneaded (the cylinder temperature of 280°C), and thereby a melt-kneaded product was produced. Next, the melt-kneaded product was discharged from the extruder, and the discharged rod-shaped melt-kneaded product was cooled. Then, the rod-shaped melt-kneaded product was cut, and thereby pellets were produced. Next, the pellets were dried at 80°C for 4 hours using a dehumidifying dryer, and thereby dried pellets (raw material resin) were produced.

Resin particles were produced in the same manner as in Example 1 except that the raw material resin was used and that the conditions shown in the following Table 1 were employed, and then a thermosetting resin composition was produced.

### Comparative Example 5

Using the extruder ("TEX30" available from The Japan Steel Works, Ltd.), 100 parts by weight of PA12 (available from Polyplastics-Evonik Corporation) and 4 parts by weight of a carbodiimide compound (Stabaxol I Powder, available from LANXESS) were melt-kneaded (the cylinder temperature of 280°C), and thereby a melt-kneaded product was produced. Next, the melt-kneaded product was discharged from the extruder, and the discharged rod-shaped melt-kneaded product was cooled. Then, the rod-shaped melt-kneaded product was cut, and thereby pellets were produced. Next, the pellets were dried at 80°C for 4 hours using a dehumidifying dryer, and thereby dried pellets (raw material resin) were produced.

Resin particles were produced in the same manner as in Example 1 except that the raw material resin was used and that the conditions shown in the following Table 1 were employed, and then a thermosetting resin composition was produced.

### Comparative Example 6

Using the extruder ("TEX30" available from The Japan Steel Works, Ltd.), 100 parts by weight of a microcrystalline alicyclic polyamide available from Polyplastics-Evonik Corporation and 4 parts by weight of a carbodiimide compound (Stabaxol I Powder, available from LANXESS) were melt-kneaded (the cylinder temperature of 280°C), and thereby a melt-kneaded product was produced. Next, the melt-kneaded product was discharged from the extruder, and the discharged rod-shaped melt-kneaded product was cooled. Then, the rod-shaped melt-kneaded product was cut, and thereby pellets were produced. Next, the pellets were dried at 80°C for 4 hours using a dehumidifying dryer, and thereby dried pellets (raw material resin) were produced.

Resin particles were produced in the same manner as in Example 1 except that the raw material resin was used and that the conditions shown in the following Table 1 were employed, and then a thermosetting resin composition was produced.

### Comparative Example 7

Using the extruder ("TEX30" available from The Japan Steel Works, Ltd.), 100 parts by weight of an amorphous alicyclic polyamide available from Polyplastics-Evonik Corporation and 4 parts by weight of a carbodiimide compound (Stabaxol I Powder, available from LANXESS) were melt-kneaded (the cylinder temperature of 280°C), and thereby a melt-kneaded product was produced. Next, the melt-kneaded product was discharged from the extruder, and the discharged rod-shaped melt-kneaded product was cooled. Then, the rod-shaped melt-kneaded product was cut, and thereby pellets were produced. Next, the pellets were dried at 80°C for 4 hours using a dehumidifying dryer, and thereby dried pellets (raw material resin) were produced.

Resin particles were produced in the same manner as in Example 1 except that the raw material resin was used and that the conditions shown in the following Table 1 were employed, and then a thermosetting resin composition was produced.

### Comparative Example 8

Using the extruder ("TEX30" available from The Japan Steel Works, Ltd.), 100 parts by weight of PA1010 (available from Polyplastics-Evonik Corporation) and 3 parts by weight of a carbodiimide compound (Stabaxol I Powder, available from LANXESS) were melt-kneaded (the cylinder temperature of 280°C), and thereby a melt-kneaded product was produced. Next, the melt-kneaded product was discharged from the extruder, and the discharged rod-shaped melt-kneaded product was cooled. Then, the rod-shaped melt-kneaded product was cut, and thereby pellets were produced. Next, the pellets were dried at 80°C for 4 hours using a dehumidifying dryer, and thereby dried pellets (raw material resin) were produced.

Resin particles were produced in the same manner as in Example 1 except that the raw material resin was used and that the conditions shown in the following Table 1 were employed, and then a thermosetting resin composition was produced.

### Comparative Example 9

Using the extruder ("TEX30" available from The Japan Steel Works, Ltd.), 65 parts by weight of the raw material resin of Example 5 and 35 parts by weight of PA12 (the carboxy group concentration of 5 mmol/kg, the amino group concentration of 400 mmol/kg, the relative viscosity of 1.33) available from Polyplastics-Evonik Corporation were melt-kneaded (the cylinder temperature of 220°C), and thereby a melt-kneaded product was produced. Next, the melt-kneaded product was discharged from the extruder, and the discharged rod-shaped melt-kneaded product was cooled. Then, the rod-shaped melt-kneaded product was cut, and thereby pellets were produced. Next, the pellets were dried at 80°C for 4 hours using a dehumidifying dryer, and thereby dried pellets (raw material resin) were produced.

Resin particles were produced in the same manner as in Example 1 except that the raw material resin was used and that the conditions shown in the following Table 1 were employed, and then a thermosetting resin composition was produced.

### Comparative Example 10

Using the extruder ("TEX30" available from The Japan Steel Works, Ltd.), 55 parts by weight of an amorphous alicyclic polyamide resin available from Polyplastics-Evonik Corporation and 45 parts by weight of PA12 (the carboxy group concentration of 5 mmol/kg, the amino group concentration of 400 mmol/kg, the relative viscosity of 1.33) available from Polyplastics-Evonik Corporation were melt-kneaded (the cylinder temperature of 220°C), and thereby a melt-kneaded product was produced. Next, the melt-kneaded product was discharged from the extruder, and the discharged rod-shaped melt-kneaded product was cooled. Then, the rod-shaped melt-kneaded product was cut, and thereby pellets were produced. Next, the pellets were dried at 80°C for 4 hours using a dehumidifying dryer, and thereby dried pellets (raw material resin) were produced.

Resin particles were produced in the same manner as in Example 1 except that the raw material resin was used and that the conditions shown in the following Table 1 were employed, and then a thermosetting resin composition was produced.

### Comparative Example 11

Using the extruder ("TEX30" available from The Japan Steel Works, Ltd.), 55 parts by weight of a microcrystalline alicyclic polyamide resin available from Polyplastics-Evonik Corporation and 45 parts by weight of PA12 (the carboxy group concentration of 5 mmol/kg, the amino end group concentration of 400 mmol/kg, the relative viscosity of 1.33) available from Polyplastics-Evonik Corporation were melt-kneaded (the cylinder temperature of 220°C), and thereby a melt-kneaded product was produced. Next, the melt-kneaded product was discharged from the extruder, and the discharged rod-shaped melt-kneaded product was cooled. Then, the rod-shaped melt-kneaded product was cut, and thereby pellets were produced. Next, the pellets were dried at 80°C for 4 hours using a dehumidifying dryer, and thereby dried pellets (raw material resin) were produced.

Resin particles were produced in the same manner as in Example 1 except that the raw material resin was used and that the conditions shown in the following Table 1 were employed, and then a thermosetting resin composition was produced.

The relative viscosity, the carboxy group concentration, and the amino group concentration concentration of the raw material resin shown in Table 1 below were measured by the above-described methods.

The relative viscosity, the carboxy group concentration, and the amino group concentration concentration of the polyamide resin used in the production of the raw material resin were also measured by the above-described methods.

**[Table 1-1]**

| | No. | Raw material resin | | Preparation of raw material resin | Relative viscosity of raw material resin | Concentration group in raw Carboxy group | of functional material resin Amino group |
|---|---|---|---|---|---|---|---|
| | | | | | (-) | (mmol/kg) | (mmol/kg) |
| Examples | #1 | PA12 | Crystalline | Polyplastics-Evonik Corporation | 1.60 | 97 | |
| | #2 | PA12 | Crystalline | Polyplastics-Evonik Corporation | 1.66 | 71 | 6 6 |
| | #3 | PA12 | Crystalline | Polyplastics-Evonik Corporation | 1.87 | 60 | 8 |
| | #4 | PA12 | Crystalline | Produced | 1.59 | 29 | 1 |
| | #5 | PA12 | Crystalline | Polyplastics-Evonik Corporation | 1.58 | 16 | 110 |
| | #6 | PA12 | Crystalline | Polyplastics-Evonik Corporation | 1.92 | 53 | 12 |
| | #7 | PA12 | Crystalline | Polyplastics-Evonik Corporation | 1.88 | 57 | 11 |
| | #8 | PA12 | Crystalline | Polyplastics-Evonik Corporation | 1.59 | 14 | 97 |
| | #9 | PA12 | Crystalline | Produced | 1.55 | 11 | 136 |
| | #10 | PA12 | Crystalline | Produced | 1.51 | 16 | 155 |
| | #11 | PA12 | Crystalline | Polyplastics-Evonik Corporation | 2.17 | 56 | 14 |
| | #12 | PA1010 | Crystalline | Polyplastics-Evonik Corporation | 2.09 | 72 | 29 |
| | #13 | Alicyclic | Amorphous | Polyplastics-Evonik Corporation | 1.72 | 14 | 47 |
| | #14 | Alicyclic | Crystalline | Polyplastics-Evonik Corporation | 1.81 | 65 | 28 |
| | #15 | PA12 | Crystalline | Polyplastics-Evonik Corporation | 2.49 | 47 | 7 |
| | #16 | Semi-aromatic | Amorphous | Daicel-Evonik Ltd. (currently, Polyplastics-Evonik Corporation) | 1.68 | 59 | 43 |
| Comparative Example | #1 | - | - | - | - | - | - |
| | #2 | PA12 | Crystalline | Produced | 1.59 | 17 | 2 |
| | *#3* | Alicyclic | Crystalline | Produced | 1.81 | 14 | 5 |
| | #4 | Alicyclic | Amorphous | Produced | 1.60 | 9 | 7 |
| | #5 | PA12 | Crystalline | Produced | 1.59 | 16 | 2 |
| | #6 | Alicyclic | Crystalline | Produced | 1.81 | 14 | 5 |
| | #7 | Alicyclic | Amorphous | Produced | 1.61 | 13 | 7 |
| | #8 | PA1010 | Crystalline | Produced | 2.06 | 17 | 4 |
| | #9 | PA12 | Crystalline | Produced | 1.49 | 13 | 202 |
| | #10 | Alicyclic | Crystalline | Produced | 1.49 | 26 | 188 |
| | #11 | Alicyclic | Amorphous | Produced | 1.56 | 27 | 193 |
| | #12 | PA12 | Crystalline | Polyplastics-Evonik Corporation | 1.50 | 113 | 3 |

**[Table 1-2]**

| | No. | Mixing ratio between water-soluble matrix and raw material resin | Extruder | Cylinder temperature |
|---|---|---|---|---|
| | | (ratio: parts by weight) | | °C |
| Examples | #1 | Modified PVA1/sugar alcohol/raw material resin = 80/20/70 | TEX30XSST | 230 |
| | #2 | Modified PVA1/sugar alcohol/raw material resin = 80/20/70 | TEX30XSST | 230 |
| | #3 | Modified PVA1/sugar alcohol/raw material resin = 85/15/70 | TEX30XSST | 230 |
| | #4 | Modified PVA1/sugar alcohol/raw material resin = 80/20/70 | TEX30XSST | 230 |
| | #5 | Modified PVA1/sugar alcohol/raw material resin = 60/40/70 | TEX30XSST | 260 |
| | #6 | Modified PVA1/sugar alcohol/raw material resin = 80/20/70 | Plastomill | 230 |
| | #7 | Modified PVA1/sugar alcohol/raw material resin = 70/30/80 | Plastomill | 240 |
| | #8 | Modified PVAl/sugar alcohol/raw material resin = 70/30/70 | TEX30XSST | 230 |
| | #9 | Modified PVA1/sugar alcohol/raw material resin = 50/50/70 | TEX30XSST | 230 |
| | #10 | Modified PVA1/sugar alcohol/raw material resin = 50/50/70 | TEX30XSST | 230 |
| | #11 | Modified PVA1/sugar alcohol/raw material resin = 85/15/65 | Plastomill | 230 |
| | #12 | Modified PVA1/sugar alcohol/raw material resin = 90/10/65 | Plastomill | 240 |
| | #13 | Modified PVA1/sugar alcohol/raw material resin = 75/25/70 | Plastomill | 260 |
| | #14 | Modified PVA1/sugar alcohol/raw material resin = 85/15/70 | Plastomill | 260 |
| | #15 | Modified PVAl/raw material resin = 100/70 | Plastomill | 240 |
| | #16 | Modified PVA1/sugar alcohol/raw material resin = 75/25/70 | TEX30XSST | 260 |
| Comparative Example | #1 | - | - | - |
| | #2 | Modified PVA1/sugar alcohol/raw material resin = 80/20/70 | TEX30XSST | 230 |
| | #3 | Modified PVA1/sugar alcohol/raw material resin = 85/15/70 | TEX30XSST | 260 |
| | #4 | Modified PVA1/sugar alcohol/raw material resin = 90/10/70 | TEX30XSST | 260 |
| | #5 | Modified PVA2/raw material resin = 100/60 | TEX30XSST | 230 |
| | #6 | Modified PVA2/raw material resin = 100/70 | TEX30XSST | 260 |
| | #7 | Modified PVA2/raw material resin = 100/70 | TEX30XSST | 260 |
| | #8 | Modified PVA2/raw material resin = 100/65 | TEX30XSST | 240 |
| | #9 | Modified PVA1/sugar alcohol/raw material resin = 50/50/70 | TEX30XSST | 230 |
| | #10 | Modified PVA1/sugar alcohol/raw material resin = 60/40/70 | TEX30XSST | 260 |
| | #11 | Modified PVA1/sugar alcohol/raw material resin = 50/50/70 | TEX30XSST | 270 |
| | #12 | Modified PVA1/sugar alcohol/raw material resin = 85/15/70 | TEX30XSST | 230 |

### Relative Viscosity, Carboxy Group Concentration, Amino Group Concentration, and Second Functional Group Concentration of Second Resin

The relative viscosity, the carboxy group concentration, and the amino group concentration, and the second functional group concentration of the second resin contained in the resin particles were measured by the above-described methods. The measured values are shown in Table 2 below.

In the Examples and the Comparative Examples, the second functional group concentration means a total concentration of the amino group and the carboxy group.

### Median Size and Sphericity of Resin Particles, and Glass Transition Temperature (Tg) of Second Resin

The median size (D50) and sphericity of the resin particles and the glass transition temperature (Tg) of the second resin were measured by the above-described methods. The measured values are shown in Table 2 below.

### Plane Strain Fracture Toughness of Cured Product (K_{IC})

First, the thermosetting resin composition was poured into a mold (47 mm (length) × 12 mm (width) × 4 mm (thickness)).

The thermosetting resin composition was then heated at 175°C until the thermosetting resin composition was sufficiently thermally cured, and a cured product with a pre-crack was produced. To form a pre-crack in the cured product, a protrusion corresponding to the pre-crack was formed on the inner surface of the mold.

Then, using the cured product with a pre-crack, the plane strain fracture toughness (K_{IC}) of the cured product was determined in accordance with ASTM D5045.

The results are shown in Table 2.

**[Table 2-1]**

| | No. | Second resin | | Relative viscosity of second resin | Tg of second resin | D50 of resin particles | Sphericity of resin particles |
|---|---|---|---|---|---|---|---|
| | | | | (-) | (°C) | (µm) | (%) |
| Examples | #1 | PA12 | Crystalline | 1.59 | 41 | 14.5 | 97 |
| | #2 | PA12 | Crystalline | 1.66 | 43 | 14.0 | 96 |
| | #3 | PA12 | Crystalline | 1.86 | 42 | 15.0 | 96 |
| | #4 | PA12 | Crystalline | 1.58 | 47 | 14.7 | 96 |
| | #5 | PA12 | Crystalline | 1.57 | 40 | 12.5 | 96 |
| | #6 | PA12 | Crystalline | 1.91 | 33 | 21.1 | 97 |
| | #7 | PA12 | Crystalline | 1.87 | 48 | 32.4 | 98 |
| | #8 | PA12 | Crystalline | 1.58 | 40 | 8.0 | 99 |
| | #9 | PA12 | Crystalline | 1.55 | 47 | 15.8 | 97 |
| | #10 | PA12 | Crystalline | 1.52 | 45 | 14.6 | 97 |
| | #11 | PA12 | Crystalline | 2.16 | 38 | 15.8 | 97 |
| | #12 | PA1010 | Crystalline | 2.07 | 41 | 14.5 | 96 |
| | #13 | Alicyclic | Amorphous | 1.73 | 122 | 18.5 | 98 |
| | #14 | Alicyclic | Crystalline | 1.80 | 131 | 17.1 | 99 |
| | #15 | PA12 | Crystalline | 2.47 | 43 | 18.2 | 97 |
| | #16 | Semi-aromatic | Amorphous | 1.60 | 150 | 16.8 | 96 |
| Comparative Example | #1 | | | - | | - | - |
| | #2 | PA12 | Crystalline | 1.58 | 37 | 14.6 | 97 |
| | #3 | Alicyclic | Crystalline | 1.79 | 128 | 16.0 | 96 |
| | #4 | Alicyclic | Amorphous | 1.59 | 129 | 14.5 | 98 |
| | #5 | PA12 | Crystalline | 1.58 | 43 | 6.1 | 97 |
| | #6 | Alicyclic | Crystalline | 1.79 | 133 | 5.0 | 98 |
| | #7 | Alicyclic | Amorphous | 1.59 | 125 | 5.4 | 96 |
| | #8 | PA1010 | Crystalline | 2.06 | 43 | 6.0 | 97 |
| | #9 | PA12 | Crystalline | 1.47 | 44 | 16.0 | 98 |
| | #10 | Alicyclic | Crystalline | 1.49 | 125 | 16.8 | 97 |
| | #11 | Alicyclic | Amorphous | 1.56 | 121 | 18.1 | 97 |
| | #12 | PA12 | Crystalline | 1.49 | 39 | 11.2 | 98 |

**[Table 2-2]**

| | No. | Concentration of functional group in second resin | | | K_{1C} |
|---|---|---|---|---|---|
| | | Carboxy group | Amino group | Second functional group | |
| | | (mmol/kg) | (mmol/kg) | (mmol/kg) | (MPa·m^{1/2}) |
| Examples | #1 | 100 | 5 | 105 | 1.06 |
| | #2 | 70 | 5 | 74 | 0.94 |
| | #3 | 58 | 10 | 68 | 0.98 |
| | #4 | 28 | 1 | 29 | 0.91 |
| | #5 | 15 | 105 | 120 | 1.13 |
| | #6 | 56 | 11 | 67 | 1.01 |
| | #7 | 55 | 13 | 68 | 1.10 |
| | #8 | 13 | 103 | 116 | 0.91 |
| | #9 | 12 | 140 | 152 | 0.95 |
| | #10 | 13 | 162 | 175 | 0.90 |
| | #11 | 60 | 16 | 76 | 1.03 |
| | #12 | 75 | 32 | 107 | 1.03 |
| | #13 | 13 | 51 | 64 | 0.91 |
| | #14 | 63 | 25 | 88 | 0.90 |
| | #15 | 49 | 6 | 55 | 1.15 |
| | #16 | 56 | 45 | 101 | 0.92 |
| Compataitve Example | #1 | - | - | - | 0.60 |
| | #2 | 18 | 2 | 20 | 0.82 |
| | #3 | 13 | 6 | 19 | 0.83 |
| | #4 | 11 | 8 | 19 | 0.81 |
| | #5 | 18 | 1 | 19 | 0.75 |
| | #6 | 13 | 7 | 19 | 0.73 |
| | #7 | 11 | 7 | 18 | 0.74 |
| | #8 | 15 | 6 | 21 | 0.82 |
| | #9 | 11 | 209 | 220 | 0.68 |
| | #10 | 28 | 180 | 208 | 0.62 |
| | #11 | 32 | 191 | 223 | 0.63 |
| | #12 | 120 | 2 | 122 | 0.75 |

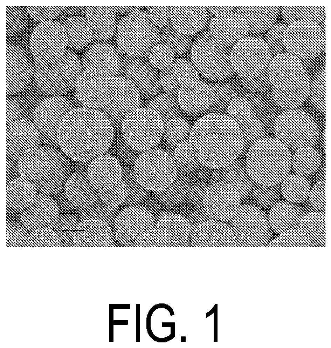

FIG. 1 shows an SEM image of the resin particles used in Example 3.

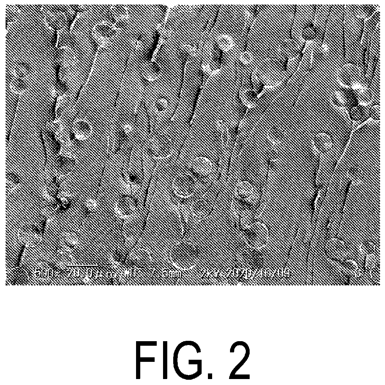

FIG. 2 shows an SEM image of a cross-section of a cured product formed by thermally curing the thermosetting resin composition of Example 3.

The cured product was produced from the thermosetting resin composition in the same manner as in the test method for plane strain fracture toughness (K_{IC}). Next, the cured product was fractured with an IZOD impact tester, and thereby a fracture surface was formed. The fracture surface was photographed by SEM.

The circular substances shown in FIG. 2 are resin particles. It can be seen that the resin particles remain in a particulate form even after curing.

As shown in Table 2, in Examples 1 to 16 falling within the scope of the present disclosure, the plane strain fracture toughness (K_{IC}) of the cured product was higher than those in Comparative Example 1 in which the thermosetting resin composition did not contain resin particles, Comparative Examples 2 to 8 in which the second functional group concentration of the second resin was low, Comparative Examples 9 and 10 in which the relative viscosity of the second resin was low and the second functional group concentration of the second resin was high, Comparative Example 11 in which the second functional group concentration of the second resin was high, and Comparative Example 12 in which the relative viscosity of the second resin was low.

Thus, the present disclosure can provide a thermosetting resin composition that forms a cured product having even higher toughness.

In comparison among the Examples, the following tendencies were observed.

That is, as the relative viscosity was higher, the plane strain fracture toughness (K_{IC}) of the cured product tended to be greater. In addition, as the median size was greater, the plane strain fracture toughness (K_{IC}) of the cured product tended to be greater. Furthermore, when the second functional group concentration of the second resin was a predetermined value or more, the plane strain fracture toughness (K_{IC}) of the cured product did not change significantly.

## Claims

1. A thermosetting resin composition comprising:
a first resin which is a thermosetting resin; and
resin particles comprising a second resin having an amide bond,
wherein
the second resin comprises one or more second functional groups selected from the group consisting of an amino group, a carboxy group, an isocyanate group, and a carboxylic anhydride group,
the first resin comprises a first functional group capable of reacting with the one or more second functional groups,
the second resin comprises the one or more second functional groups in an amount of from 25 to 190 mmol/kg, and
the second resin has a relative viscosity of from 1.50 to 2.50.

2. The thermosetting resin composition according to claim 1, wherein the second resin comprises a polyamide resin.

3. The thermosetting resin composition according to claim 2, wherein the polyamide resin comprises an aliphatic polyamide resin and/or an alicyclic polyamide resin.

4. The thermosetting resin composition according to claim 3, wherein the polyamide resin comprises the alicyclic polyamide resin.

5. The thermosetting resin composition according to any one of claims 1 to 4, wherein the resin particles have a median size of 50 µm or less.

6. The thermosetting resin composition according to any one of claims 1 to 4, wherein the resin particles have a sphericity of 75% or more.

7. The thermosetting resin composition according to any one of claims 1 to 4, wherein the second resin has a glass transition temperature of from 30 to 160°C.

8. The thermosetting resin composition according to claim 7, wherein the second resin has a glass transition temperature of from 30 to 48°C.

9. The thermosetting resin composition according to any one of claims 1 to 4, wherein the second resin comprises the one or more second functional groups in an amount of from 29 to 120 mmol/kg.

10. The thermosetting resin composition according to any one of claims 1 to 4, wherein the first resin comprises an epoxy resin.

11. The thermosetting resin composition according to any one of claims 1 to 4, wherein the thermosetting resin composition comprises the resin particles in an amount of from 1 to 20 parts by weight per 100 parts by weight of the first resin.

12. A cured product formed by thermally curing the thermosetting resin composition described in any one of claims 1 to 4.

13. A prepreg in which an aggregate of reinforcing fibers is impregnated or infused with the thermosetting resin composition described in any one of claims 1 to 4.

14. A molded article formed from the cured product described in claim 12.

15. A fiber-reinforced plastic comprising:
the cured product described in claim 12; and
a reinforcing fiber.

16. The fiber-reinforced plastic according to claim 15, wherein the fiber-reinforced plastic has two or more layers comprising the reinforcing fiber.
